# EUROPEAN PATENT APPLICATION

(11) **EP 4 763 646 A1**
(43) Date of publication of application: **24.06.2026**
(21) Application number: 24221148.0
(22) Date of filing: 18.12.2024
(51) Int. Cl.: B60W 30/18, B60W 50/10, B60W 50/00, B60W 50/08, F02D 11/10

(54) **A COMPUTER SYSTEM COMPRISING PROCESSING CIRCUITRY CONFIGURED TO CONTROL PROPULSION OF A VEHICLE**

(71) Applicant: Volvo Truck Corporation, 405 08 Göteborg (SE)
(72) Inventor: Kollberg, Peter, 448 35 Floda (SE)
(74) Representative: Valea AB

(57) **Abstract**

A computer system (800) comprising processing circuitry (802) configured to control propulsion of a vehicle (2), the vehicle comprising: a power unit (4), configured to propel the vehicle, and an accelerator pedal (6). The processing circuitry (802) is further configured to: obtain information indicative of a position of the accelerator pedal, control propulsion of the power unit (4) based on the information indicative of the position of the accelerator pedal. The processing circuitry is further configured to control the power unit in either a torque control mode or a speed control mode. In the torque control mode, the information indicative of the position of the accelerator pedal is indicative of a target torque of the power unit and the power unit is controlled based on the target torque of the power unit. In the speed control mode, the information indicative of the position of the accelerator pedal is indicative of a target speed (Tₛ) of the vehicle and the power unit is controlled based on the target speed of the vehicle. The processing circuitry is further configured to, in the torque control mode with the accelerator pedal depressed: determine an instant that an acceleration phase of the vehicle is complete, and in response thereto, switch control from the torque control mode to the speed control mode.

## Description

### TECHNICAL FIELD

The disclosure relates generally to a computer system. In particular aspects, the disclosure relates to a computer system comprising processing circuitry configured to control propulsion of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Typically, during manual driving of a vehicle, a computer system may control a power unit of the vehicle based on a driver request for a desired torque, using an accelerator pedal. Alternatively, the computer system may operate with various levels of automation to control the power unit, which may in some cases be adapted to achieve greater energy efficiency than typical manual driving. A problem exists that it is difficult to combine both manual control from the driver with automated methods of controlling the power unit without negatively impacting the responsiveness of the output of the power unit for a given driver request. Such poor responsiveness may lead to overcompensation from the driver, thus negating the impact of the automated methods of controlling the power unit, such as to improve energy efficiency. Therefore, there is a need to develop improved technology relating to such computer systems.

### SUMMARY

According to a first aspect of the disclosure, a computer system comprising processing circuitry configured to control propulsion of a vehicle is provided. The vehicle comprises: a power unit, configured to propel the vehicle, and an accelerator pedal. The processing circuitry is further configured to: obtain information indicative of a position of the accelerator pedal, and control propulsion of the power unit based on the information indicative of the position of the accelerator pedal. The processing circuitry is further configured to control the power unit in either a torque control mode or a speed control mode. In the torque control mode, the information indicative of the position of the accelerator pedal is indicative of a target torque of the power unit and the power unit is controlled based on the target torque of the power unit. In the speed control mode, the information indicative of the position of the accelerator pedal is indicative of a target speed of the vehicle and the power unit is controlled based on the target speed of the vehicle. The processing circuitry is further configured to, in the torque control mode with the accelerator pedal depressed: determine an instant that an acceleration phase of the vehicle is complete, and in response thereto, switch control from the torque control mode to the speed control mode.

The accelerator pedal may be movable between a rest position and a fully depressed position. The accelerator pedal being depressed may comprise the accelerator pedal being moved from the rest position. The power unit may comprise an internal combustion engine, electric motor, a combination thereof (i.e., a hybrid), or the like. The acceleration phase may comprise an acceleration event in which the speed of the vehicle increases from an initial speed to a subsequent speed. In some examples the acceleration phase may comprise the entire acceleration event, such that the acceleration phase ends when the vehicle speed stops increasing. Alternatively, in some examples the acceleration phase may comprise only a portion of the acceleration event, such that at the end of the acceleration phase the speed of the vehicle is still increasing. In the speed control mode the torque control of the power unit may comprise a closed-loop control. In at least some examples the torque control of the power unit may be based on the target speed and at least one of environmental data of the surface area and/or the vehicle, load applied to one or more axles of the vehicle, steering information of the vehicle, characteristics of the vehicle, or driver input.

The first aspect of the disclosure may seek to transition from a torque control mode to a speed control mode when an acceleration phase of the vehicle is complete, such that in at least some examples the vehicle is at least close to the desired motion as intended by the driver when switching to the speed control mode. A technical benefit may include improving driver acceptance of a transition to a speed control mode, such that in at least some examples an improved energy efficiency may be achieved.

Optionally in some examples, including in at least one preferred example, the processing circuitry is configured to, in the torque control mode with the accelerator pedal depressed: obtain information indicative of any one of speed and acceleration of the vehicle, and determine the instant the acceleration phase of the vehicle is complete when the information indicative of any one of speed and acceleration fulfils a first criterion, wherein the first criterion is indicative of completion of the acceleration phase. A technical benefit may include completion of the acceleration phase may be determined such that driver acceptance of a transition to a speed control mode may be improved.

Optionally in some examples, including in at least one preferred example, the processing circuitry is configured to, in the torque control mode with the accelerator pedal depressed: obtain information indicative of a speed limit of a current road portion or a speed of a vehicle in front, determine the target speed of the vehicle based on the information indicative of the speed limit of the current road portion or the speed of the vehicle in front, and determine the first criterion based on the target speed. A technical benefit may include a driver's intention may be more reliably determined.

Optionally in some examples, including in at least one preferred example, the processing circuitry is configured to, in the torque control mode with the accelerator pedal depressed: obtain status information indicative of at least one of speed and/or acceleration of the vehicle, environmental data of the surface area and/or the vehicle, load applied to one or more axles of the vehicle, steering information of the vehicle, characteristics of the vehicle, or driver input, determine the target speed of the vehicle based on the position of the accelerator pedal and the status information, and determine the first criterion based on the target speed. Environmental data of the surface area may comprise road grade, surface type, etc. Environmental data of the vehicle may comprise weather, temperature, wind speed, etc. A technical benefit may include a driver's intention may be more reliably determined.

Optionally in some examples, including in at least one preferred example, the first criterion comprises a speed of the vehicle being greater than or equal to a threshold. A technical benefit may include driver acceptance of a transition to a speed control mode may be improved.

Optionally in some examples, including in at least one preferred example, the threshold comprises a value within 5km/h of the target speed, preferably within 2 km/h of the target speed.

Optionally in some examples, including in at least one preferred example, the first criterion comprises an acceleration of the vehicle being less than or equal to a threshold. A technical benefit may include driver acceptance of a transition to a speed control mode may be improved.

Optionally in some examples, including in at least one preferred example, the threshold comprises a value less than or equal to 0.1 m/s².

Optionally in some examples, including in at least one preferred example, the processing circuitry is further configured to, in the torque control mode with the accelerator pedal depressed: determine the instant the acceleration phase of the vehicle is complete when the information indicative of the position of the accelerator pedal fulfils a second criterion, wherein the second criterion comprises movement of the accelerator pedal indicative of a driver's intention to end the acceleration phase. A technical benefit may include a driver's intention may be more reliably determined.

Optionally in some examples, including in at least one preferred example, the second criterion comprises movement of the accelerator pedal from an initial position to a subsequent position, wherein the subsequent position is between 90-95% of the initial position. In at least some examples the subsequent position being between 90-95% of the initial position means that the driver releases the pedal by 5-10%, such that the pedal is moved towards the rest position.

Optionally in some examples, including in at least one preferred example, the processing circuitry is configured to determine the second criterion based on a machine learning model, wherein the machine learning model is trained based on one or more training vehicles using information indicative of any one of speed and acceleration of the vehicle and information indicative of movement of the accelerator pedal, and wherein the machine learning model is trained on the corresponding outcome of whether the respective training vehicle was successful in ending the acceleration phase for a movement of the accelerator pedal. A technical benefit may include the driver's intentions may be more reliably determined. This is since when the machine learning model is used for determining the second criterion, determining the second criterion may effectively determine the second criterion by considering a vast number of different conditions and movements of the accelerator pedal and how they were handled to be successful or not successful in ending the acceleration phase. Utilizing the training data, the machine learning model may effectively determine a second criterion which is likely to fulfill a driver's intention.

Optionally in some examples, including in at least one preferred example, the machine learning model is further trained on vehicle status information indicative of any one or more of: environmental data of a current road portion, an upcoming road portion, and/or the vehicle, load applied to one or more axles of the vehicle, steering information of the vehicle, characteristics of the vehicle, or driver input. A technical benefit may include an improved determination of the driver's intentions. This is since the various optional parameters as above may have an effect on whether ending the acceleration phase is successful and may be useful to more efficiently determine a second criterion for future situations. For example, environmental data of a current road portion may change which second criterion is best suited.

Optionally in some examples, including in at least one preferred example, the processing circuitry is further configured to: control the power unit in a speed control mode only when the speed of the vehicle is above a threshold, wherein the threshold is preferably in a range of 40-80 km/h, such as 60 km/h. A technical benefit may include driver acceptance of a transition to a speed control mode may be improved.

Optionally in some examples, including in at least one preferred example, the processing circuitry is further configured to: control the power unit in a speed control mode only when the vehicle is located in a particular geographic location. The geographic location may relate to a highway, a rural road, an area outside of a city, or an area having a specific speed limit. A technical benefit may include driver acceptance of a transition to a speed control mode may be improved.

Optionally in some examples, including in at least one preferred example, the processing circuitry is further configured to, in the speed control mode: switch control from the speed control mode to the torque control mode when the information indicative of the position of the accelerator pedal fulfils a third criterion. A technical benefit may include the driver's intentions may be more reliably determined.

Optionally in some examples, including in at least one preferred example, the third criterion comprises information indicative of the position of the accelerator pedal such that the target speed deviates from an initial target speed by at least 5 km/h, wherein the initial target speed comprises the target speed upon control of the power unit switching from the torque control mode to the speed control mode.

According to a second aspect of the disclosure, a vehicle comprising the computer system is provided. Technical benefits of the second aspect of the disclosure are largely analogous to the technical benefit of the first aspect of the disclosure. It shall also be noted that all examples of the second aspect of the disclosure are applicable to and/or combinable with all embodiments of the first aspect of the disclosure, and vice versa.

According to a third aspect of the disclosure, a computer-implemented method for controlling propulsion of a vehicle is provided. The vehicle comprises: a power unit, configured to propel the vehicle, and an accelerator pedal. The method comprising: by processing circuitry of a computer system, obtaining information indicative of a position of an accelerator pedal, and by the processing circuitry, controlling propulsion of the power unit based on the information indicative of the position of the accelerator pedal. The method comprises controlling the power unit in either a torque control mode or a speed control mode. In the torque control mode, the information indicative of the position of the accelerator pedal is indicative of a target torque of the power unit and controlling the power unit is based on the target torque of the power unit. In the speed control mode, the information indicative of the position of the accelerator pedal is indicative of a target speed of the vehicle and controlling the power unit is based on the target speed of the vehicle. Wherein the method further comprises, in the torque control mode with the accelerator pedal depressed: by the processing circuitry, determining an instant that an acceleration phase of the vehicle is complete, and by the processing circuitry, in response thereto, switching control from the torque control mode to the speed control mode.

Technical benefits of the third aspect of the disclosure are largely analogous to the technical benefit of the first aspect of the disclosure. It shall also be noted that all examples of the first aspect of the disclosure are applicable to and/or combinable with all embodiments of the first aspect of the disclosure, and vice versa.

Optionally in some examples, including in at least one preferred example, in the torque control mode with the accelerator pedal depressed: the method comprises, by the processing circuitry, obtaining information indicative of any one of speed and acceleration of the vehicle, and by the processing circuitry, determining the instant the acceleration phase of the vehicle is complete when the information indicative of any one of speed and acceleration fulfils a first criterion, wherein the first criterion is indicative of completion of the acceleration phase.

Optionally in some examples, including in at least one preferred example, in the torque control mode with the accelerator pedal depressed: the method comprises, by the processing circuitry, determining the instant the acceleration phase of the vehicle is complete when the information indicative of the position of the accelerator pedal fulfils a second criterion, wherein the second criterion comprises movement of the accelerator pedal indicative of a driver's intention to end the acceleration phase.

According to a fourth aspect of the disclosure, a computer program product is provided comprising program code for performing, when executed by the processing circuitry, the method according to any example disclosed herein. Technical benefits of the fourth aspect of the disclosure are largely analogous to the technical benefit of the third aspect of the disclosure. It shall also be noted that all examples of the third aspect of the disclosure are applicable to and/or combinable with all embodiments of the first aspect of the disclosure, and vice versa.

According to a fifth aspect of the disclosure, A non-transitory computer-readable storage medium is provided comprising instructions, which when executed by the processing circuitry, cause the processing circuitry to perform the method according to any example disclosed herein. Technical benefits of the fifth aspect of the disclosure are largely analogous to the technical benefit of the third aspect of the disclosure. It shall also be noted that all examples of the fifth aspect of the disclosure are applicable to and/or combinable with all embodiments of the first aspect of the disclosure, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary accelerator pedal according to an example.
**FIG. 3a** is a plot of torque and position of the accelerator pedal for a torque control mode.
**FIG. 3b** is a plot of speed and position of the accelerator pedal for a speed control mode.
**FIG. 4a** is a plot of speed and time for an acceleration event.
**FIG. 4b** is a plot of acceleration and time for the acceleration event of Fig. 5a.
**FIG. 4c** is a plot of torque and time for the acceleration event of Fig. 5a.
**FIG. 5** is a flow chart of an exemplary method to control propulsion of a vehicle according to an example.
**FIG. 6** is a schematic diagram of an exemplary computer system for implementing examples disclosed herein, according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

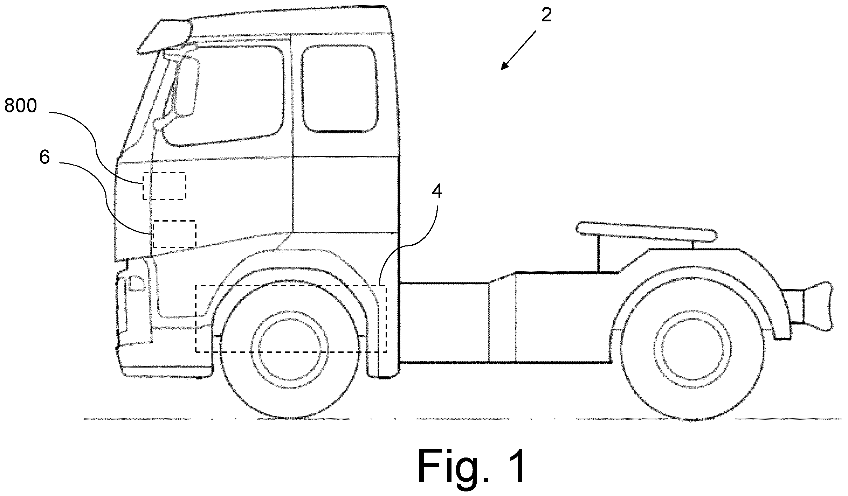

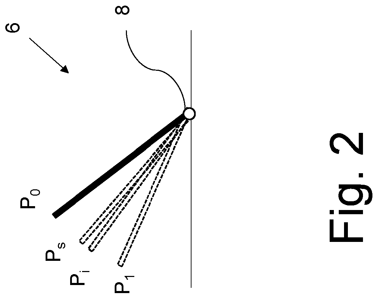

**FIG. 1** is an exemplary vehicle 2 according to an example, in the form of a truck 2. Whilst the shown aspect comprises a truck 2, the vehicle 2 may comprise any type of vehicle such as a car, bus, industrial vehicle, marine vessel, aircraft, etc. In the shown example the vehicle 2 comprises a power unit 4, configured to propel the vehicle 2, and an accelerator pedal 6 (described in more detail with reference to FIG. 2). In at least some examples the power unit 4 may comprise an internal combustion engine, electric motor, a hybrid powertrain, or any known type of power unit which may be used to propel the vehicle 2. The vehicle further comprises a computer system 800.

The vehicle 2 may comprise one or more sensors (not shown). The one or more sensors may be of any suitable type for measuring any suitable parameter. In particular, the one or more sensors may comprise one or more sensors for measuring the motion or status of the wheels and/or the vehicle 2. The one or more sensors may further comprise any other sensors which may measure or detect information of the surroundings of the vehicle 2.

The vehicle 2 may comprise a Controller Area Network (CAN) (not shown). The CAN may be able to transmit any suitable signals or information of the vehicle status, sensor data, actuation data of actuators, or any suitable signals.

Examples herein may be performed by the computer system 800 and/or a processing circuitry 802 therein.

The computer system 800 and/or the processing circuitry 802 therein may be or may comprise an Electronic Control Unit (ECU) of the vehicle.

**FIG. 2** is an exemplary accelerator pedal 6 according to an example. In the shown example the accelerator pedal 6 is movable between a rest position P₀ and a fully depressed position P₁. A driver of the vehicle may move the accelerator pedal 6 between the rest position P₀ and the fully depressed position P₁, typically by pressing and releasing the pedal using a foot. The accelerator pedal 6 may be biased towards the rest position P₀, such that when the pedal 6 is released by the driver the accelerator pedal 6 returns to the rest position P₀. In the shown example the accelerator pedal 6 is movable between the rest position P₀ and the fully depressed position P₁ by a rotational movement. In at least some examples the pedal 6 may be movable between the rest position P₀ and the fully depressed position P₁ by a translational movement, or a combination of rotational and translational movement. The pedal 6 may be considered as depressed when displaced from the rest position P₀.

The processing circuitry 802 is configured to: obtain information indicative of a position of the accelerator pedal 6, and control propulsion of the power unit 4 based on the information indicative of the position of the accelerator pedal 6. In the shown example the vehicle 2 comprises an acceleration pedal position sensor 8, configured to determine the position of the accelerator pedal 6, wherein the processing circuitry 802 is configured to: obtain information indicative of a position of the accelerator pedal 6 from the acceleration pedal position sensor 8.

The processing circuitry 802 is further configured to control the power unit 4 in either a torque control mode or a speed control mode.

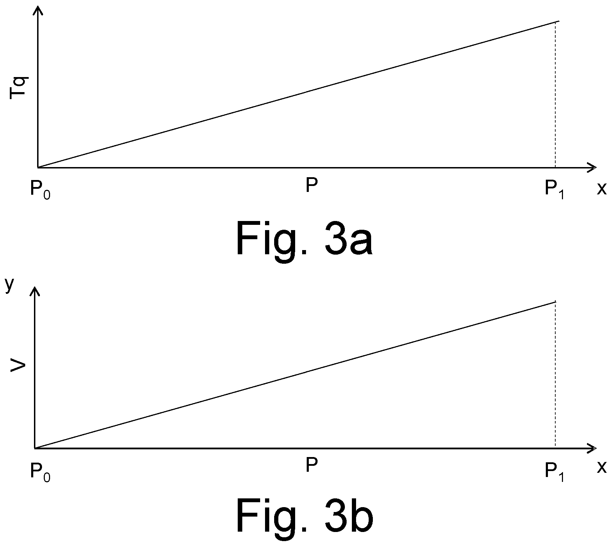

**FIG. 3a** is a plot of torque and position of the accelerator pedal 6 for the torque control mode. The plotted torque corresponds to a target torque of the power unit 4. In the torque control mode, the information indicative of the position of the accelerator pedal 6 is indicative of the target torque of the power unit 4 and the power unit 4 is controlled based on the target torque of the power unit 4. In at least some examples the rest position P₀ may correspond to a target torque of zero, and the fully depressed position P₁ may correspond to a maximum target torque.

The output torque of the power unit 4 may differ from the target torque. In at least some examples the target torque may differ to the output torque due to lag. Furthermore, there may be a number of parameters impacting the operation of the power unit 4, including environmental parameters of the vehicle, such as humidity, temperature, air pressure, etc., or the like., as well as parameters of the power unit 4, such as wear. Additionally, the output torque may be dependent on a gearing, or the like, where the output, i.e., drive axle, wheels, or the like, is connected to the power unit 4 via a transmission (not shown). Thus, the target torque may be merely indicative of an output torque, wherein as the accelerator pedal 6 moves from the rest position P₀ to the fully depressed position P₁ an output torque is configured to increase to a maximum possible torque. Furthermore, in at least some examples the vehicle 2 may comprise systems for overriding the target torque, for example a speed limiting system, a collision avoidance system, or the like.

In the shown example, the target torque increases linearly with position of the accelerator pedal 6. Alternatively, in at least some examples the relationship between target torque and position of the accelerator pedal 6 may be non-linear.

**FIG. 3b** is a plot of speed and position of the accelerator pedal 6 for a speed control mode. The plotted speed corresponds to a target speed Tₛ of the vehicle 2. In the speed control mode, the information indicative of position of the accelerator pedal 6 is indicative of a target speed Tₛ of the vehicle 2, and the power unit 4 is controlled based on the target speed Tₛ of the vehicle 2. In at least some examples the power unit 4 may be controlled such that a driver may maintain a speed of the vehicle 2 by maintaining a position of the accelerator pedal 6 irrespective of environmental parameters of the surface area and/or the vehicle, such as road grade, road surface, weather, temperature, wind speed, etc., or the like.

The actual speed of the vehicle 2 may differ from the target speed Tₛ. In at least some examples a target speed Tₛ may differ to the actual speed due to lag. Furthermore, there may be a number of parameters impacting the speed of the vehicle 2, including environmental parameters of the surface area and/or the vehicle, such as wind speed, road grade, road surface, as well as driving parameters, such as performing a turning maneuver, approaching a vehicle in front, etc. Furthermore, in at least some examples the actual speed may differ from the target speed Tₛ due to environmental parameters, for example, the processing circuitry may reduce speed when approaching a downslope, a vehicle is detected in front, or when an upcoming maneuver requires a lower speed, etc. Furthermore, in at least some examples, the processing circuitry may increase speed when approaching an upslope, a vehicle is detected at the rear, or when an upcoming maneuver requires an increased speed, etc.

In the shown example, the target speed Tₛ increases linearly with position of the accelerator pedal 6. Alternatively, in at least some examples the relationship between speed and position of the accelerator pedal 6 may be non-linear.

In at least some examples the speed control mode may function similar to a cruise control mode, wherein the target speed Tₛ is set by the position of the accelerator pedal 6. In at least some examples, in the speed control mode, the output of the power unit 4 may be continuously adjusted, such as by a closed-loop control, such that the actual speed may be corrected towards the target speed Tₛ. In at least some examples, in the speed control mode, environmental data may be obtained by the processing circuitry and used to control output of the power unit 4. The environmental data may relate to road grade, road surface, a vehicle in front, an upcoming maneuver, such as a turn, round-about, or the like, etc. The environmental data may be obtained from one or more sensors of the vehicle 2 and/or from the CAN of the vehicle 2.

The speed control mode may comprise a driver profile, the driver profile defining the behavior of the acceleration of the vehicle 2 in the speed control mode. In at least some examples the driver profile may comprise an eco-mode, wherein acceleration of the vehicle is controlled to minimize energy consumption. In at least some examples the driver profile may be customized for the driver. In at least some examples the vehicle may comprise a plurality of driver profiles, with more and less aggressive acceleration. In at least some examples the driver may select between the plurality of driver profiles using a user interface (not shown). In at least some examples each of the plurality of driver profiles may be suited to one of a plurality of drivers. In at least some examples the driver profile may be adaptive and may adjust the acceleration behavior to suit the driver. In at least some examples adaptation of the driver profile may be achieved by continuously collecting and evaluating data about how the driver pushes the accelerator pedal 6. In at least some examples a driver profile may be adapted such that acceleration is more aggressive, for example where data about how the driver pushes the accelerator pedal 6 indicates the driver prone to push the accelerator pedal 6 such that the target speed Tₛ passes a final intended target speed Tₛ.

In at least some examples the target speed Tₛ may be displayed to the driver via the user interface, at least when in the speed control mode.

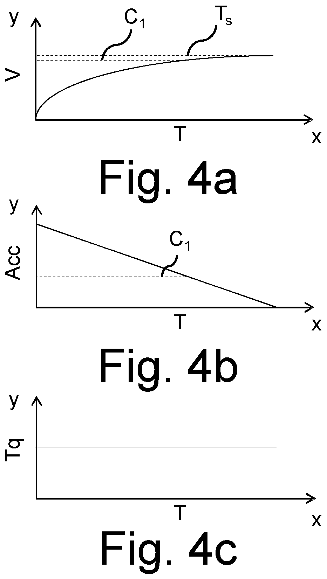

**FIG. 4a****-** **FIG. 4c** are plots for an acceleration event. **FIG. 4a** is a plot of speed and time, **FIG. 4b** is a plot of acceleration and time, and **FIG. 4c** is a plot of torque and time. The acceleration event comprises an acceleration of the vehicle 2 in the torque control mode. In the shown example a constant torque is requested, such as for a constant position of the accelerator pedal 6 at a depressed position, resulting in an acceleration, from a maximum acceleration to zero acceleration, and the speed increasing from zero to a top speed.

In the shown example, the acceleration event comprises acceleration from rest. In at least some examples an acceleration event may start from a non-zero speed. Furthermore, in at least some examples an acceleration event may comprise a change in the target torque, for example where the position of the accelerator pedal 6 varies.

The processing circuitry 802 may be configured to, in the torque control mode with the accelerator pedal 6 depressed: determine an instant that an acceleration phase of the vehicle 2 is complete, and in response thereto, switch control from the torque control mode to the speed control mode. In at least some examples the acceleration phase may comprise the acceleration event. Alternatively, in at least some examples the acceleration phase may comprise a portion of the acceleration event.

In at least some examples the processing circuitry 802 is further configured to: control the power unit 4 in a speed control mode only when the speed of the vehicle 2 is above a threshold. In at least some examples the threshold is in a range of 40-80 km/h, such as 60 km/h. In at least some examples the processing circuitry 802 may be further configured to: control the power unit 4 in a speed control mode only when the vehicle 2 is located in a particular geographic location. The geographic location may relate to a highway, a rural road, an area outside of a city, or an area having a specific speed limit. The geographic location may be determined based on map data stored at the vehicle, or received via satellite data, V2V communication, etc., or detection of road signs, or the like using cameras. Alternatively, in at least some examples the speed control mode may be possible at any speed, and/or in any geographic location.

In at least some examples the processing circuitry 802 may be configured to, in the torque control mode with the accelerator pedal 6 depressed: obtain information indicative of any one of speed and acceleration of the vehicle 2, and determine the instant the acceleration phase of the vehicle 2 is complete when the information indicative of any one of speed and acceleration fulfils a first criterion C₁, wherein the first criterion C₁ is indicative of completion of the acceleration phase.

In at least some examples the first criterion may comprise a speed less than the top speed, or an acceleration greater than zero. In at least some examples the first criterion C₁ may comprise the top speed, or the acceleration being equal to zero.

In at least some examples the processing circuitry 802 is configured to, in the torque control mode with the accelerator pedal 6 depressed: obtain information indicative of a speed limit of a current road portion or a speed of a vehicle 2 in front, and determine the target speed Tₛ of the vehicle 2 based on the information indicative of the speed limit of the current road portion or the speed of the vehicle 2 in front, and determine the first criterion C₁ based on the target speed Tₛ. In at least some examples the speed limit of the current road portion may be received via map data stored at the vehicle, or received via satellite data, V2V communication, or using sensors, for example cameras. Alternatively, in at least some examples the speed limit of the current road portion may be input by the driver, via a user interface, such as a touch screen, buttons, knob, or the like.

In at least some examples the processing circuitry 802 is configured to, in the torque control mode with the accelerator pedal 6 depressed: obtain status information indicative of at least one of speed and/or acceleration of the vehicle 2, environmental data of the surface area and/or the vehicle 2, load applied to one or more axles of the vehicle 2, steering information of the vehicle 2, characteristics of the vehicle 2, or driver input, determine the target speed Tₛ of the vehicle 2 based on the position of the accelerator pedal 6 and the status information, determine the first criterion C₁ based on the target speed Tₛ.

In at least some examples the first criterion C₁ comprises a speed of the vehicle 2 being greater than or equal to a threshold, see **Fig. 4a****.** In at least some examples the threshold comprises a value within 5km/h of the target speed Tₛ, preferably within 2 km/h of the target speed Tₛ.

In at least some examples the first criterion C₁ comprises an acceleration of the vehicle 2 being less than or equal to a threshold, see **Fig. 4b**. In at least some examples the threshold comprises a value less than or equal to 0.1 m/s².

Referring again to **Fig. 2**, in at least some examples the processing circuitry 802 is further configured to, in the torque control mode with the accelerator pedal 6 depressed: determine the instant the acceleration phase of the vehicle 2 is complete when the information indicative of the position of the accelerator pedal 6 fulfils a second criterion, wherein the second criterion comprises movement of the accelerator pedal 6 indicative of a driver's intention to end the acceleration phase.

In at least some examples the second criterion comprises movement of the accelerator pedal 6 from an initial position Pᵢ to a subsequent position Pₛ, wherein the subsequent position Pₛ is between 90-95% of the initial position Pᵢ. In the shown example both the initial position Pᵢ and the subsequent position Pₛ comprise positions of the accelerator pedal 6, wherein the accelerator pedal 6 is depressed. In the shown example the driver moves the accelerator pedal 6 from the initial position Pᵢ to the subsequent position Pₛ by partially releasing the accelerator pedal 6.

In at least some examples the processing circuitry 802 may be configured to determine the second criterion based on a machine learning model, wherein the machine learning model may be trained based on one or more training vehicles using information indicative of any one of speed and acceleration of the vehicle and information indicative of movement of the accelerator pedal 6, and wherein the machine learning model may be trained on the corresponding outcome of whether the respective training vehicle was successful in ending the acceleration phase for a movement of the accelerator pedal 6.

The machine learning model may be further trained on vehicle status information indicative of any one or more of: environmental data of a current road portion, an upcoming road portion, and/or the vehicle 2, load applied to one or more axles of the vehicle 2, steering information of the vehicle 2, characteristics of the vehicle 2, or driver input.

The initial machine learning model of examples herein, e.g., for determining the second criterion may be initialized with training using vast training data collected from multiple years at different ranges and configurations of any of the parameters of examples herein. This training data may be truth labelled the best starting point of the parameters after extensive driving and tuning.

Any of the following methods may be used for training machine learning models herein: Linear Regression, Ridge Regression, Neural Network Regression, Lasso Regression, Decision Tree Regression, Random Forest, KNN Model, Support Vector Machines (SVM), Gaussian Regression, Polynomial Regression.

Machine learning models herein may further comprise Recurrent Neural Networks, e.g., using time series data meaning that the training data is time stamped, and the training data further includes the time stamp.

The trained machine learning model of any example herein may be deployed in a controller onboard the vehicle 2 or on a server-based controller which receives necessary feature data over the air and estimates the parameters.

In at least some examples the processing circuitry 802 may be further configured to, in the speed control mode: switch control from the speed control mode to the torque control mode when the information indicative of the position of the accelerator pedal 6 fulfils a third criterion. In at least some examples the third criterion comprises information indicative of the position of the accelerator pedal 6 such that the target speed Tₛ deviates from an initial target speed by at least 5 km/h, wherein the initial target speed Tₛ comprises the target speed Tₛ upon control of the power unit 4 switching from the torque control mode to the speed control mode.

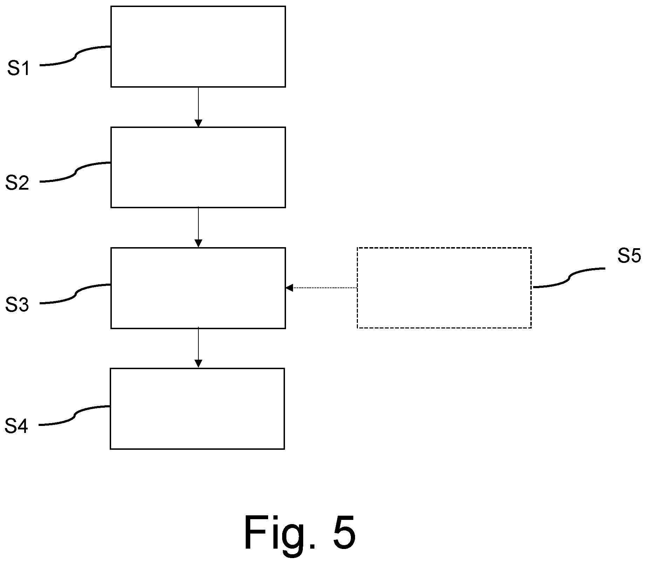

**FIG. 5** is a flow chart of an exemplary method to control propulsion of the vehicle 2 as described above.

The method may be performed by the computer system 800 and/or the processing circuitry 802 therein. The method comprises the following actions, which actions may be performed in any suitable order:
**S1:** obtaining information indicative of a position of an accelerator pedal 6,
**S2:** controlling propulsion of the power unit 4 based on the information indicative of the position of the accelerator pedal 6, wherein the method comprises controlling the power unit 4 in either a torque control mode or a speed control mode
**S3:** in the torque control mode with the accelerator pedal 6 depressed: determining an instant that an acceleration phase of the vehicle 2 is complete,
**S4:** in response thereto, switching control from the torque control mode to the speed control mode,

In at least some examples the method may further comprise, in the torque control mode with the accelerator pedal 6 depressed: obtaining S5 information indicative of any one of speed and acceleration of the vehicle 2, and determining S3 the instant the acceleration phase of the vehicle 2 is complete when the information indicative of any one of speed and acceleration fulfils a first criterion C₁, wherein the first criterion C₁ is indicative of completion of the acceleration phase.

In at least some examples the method may further comprise, in the torque control mode with the accelerator pedal 6 depressed: by the processing circuitry 802, determining S3 the instant the acceleration phase of the vehicle 2 is complete when the information indicative of the position of the accelerator pedal 6 fulfils a second criterion, wherein the second criterion comprises movement of the accelerator pedal 6 indicative of a driver's intention to end the acceleration phase.

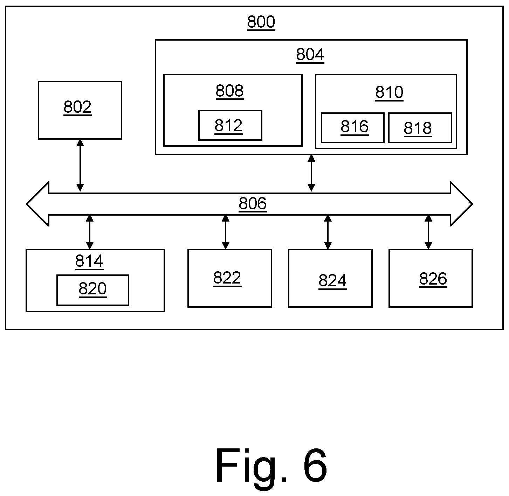

**FIG. 6** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804,** and a system bus **806.** The computer system **800** may include at least one computing device having the processing circuitry **802.** The system bus **806** provides an interface for system components including, but not limited to, the memory **804** and the processing circuitry **802.** The processing circuitry **802** may include any number of hardware components for conducting data or signal processing or for executing computer code stored in memory **804.** The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device. The processing circuitry **802** may be configured to control propulsion of the vehicle 2

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., randomaccess memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802.** In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802.** The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device
interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples, where each respective example may be combined with any of the above examples or subject matter of the attached claims.

**Example 1:** A computer system 800 comprising processing circuitry 802 configured to control propulsion of a vehicle 2, the vehicle 2 comprising: a power unit 4, configured to propel the vehicle 2, an accelerator pedal 6, wherein the processing circuitry 802 is further configured to: obtain information indicative of a position of the accelerator pedal 6, control propulsion of the power unit 4 based on the information indicative of the position of the accelerator pedal 6, and wherein the processing circuitry 802 is further configured to control the power unit 4 in either a torque control mode or a speed control mode, wherein in the torque control mode, the information indicative of the position of the accelerator pedal 6 is indicative of a target torque of the power unit 4 and the power unit 4 is controlled based on the target torque of the power unit 4, and in the speed control mode, the information indicative of the position of the accelerator pedal 6 is indicative of a target speed Tₛ of the vehicle 2 and the power unit 4 is controlled based on the target speed Tₛ of the vehicle 2,
and wherein the processing circuitry 802 is further configured to, in the torque control mode with the accelerator pedal 6 depressed: determine an instant that an acceleration phase of the vehicle 2 is complete, and in response thereto, switch control from the torque control mode to the speed control mode.

**Example 2:** The computer system 800 of example 1, wherein the processing circuitry 802 is configured to, in the torque control mode with the accelerator pedal 6 depressed: obtain information indicative of any one of speed and acceleration of the vehicle 2, determine the instant the acceleration phase of the vehicle 2 is complete when the information indicative of any one of speed and acceleration fulfils a first criterion C₁, wherein the first criterion C₁ is indicative of completion of the acceleration phase.

**Example 3:** The computer system 800 of example 2, wherein the processing circuitry 802 is configured to, in the torque control mode with the accelerator pedal 6 depressed: obtain information indicative of a speed limit of a current road portion or a speed of a vehicle 2 in front, determine the target speed Tₛ of the vehicle 2 based on the information indicative of the speed limit of the current road portion or the speed of the vehicle 2 in front, determine the first criterion C₁ based on the target speed Tₛ.

**Example 4:** The computer system 800 of example 2, wherein the processing circuitry 802 is configured to, in the torque control mode with the accelerator pedal 6 depressed: obtain status information indicative of at least one of speed and/or acceleration of the vehicle 2, environmental data of the surface area and/or the vehicle 2, load applied to one or more axles of the vehicle 2, steering information of the vehicle 2, characteristics of the vehicle 2, or driver input, determine the target speed Tₛ of the vehicle 2 based on the position of the accelerator pedal 6 and the status information, determine the first criterion C₁ based on the target speed Tₛ.

**Example 5:** The computer system 800 of any of examples 3-4, wherein the first criterion C₁ comprises a speed of the vehicle 2 being greater than or equal to a threshold.

**Example 6:** The computer system 800 of example 5, wherein the threshold comprises a value within 5km/h of the target speed Tₛ, preferably within 2 km/h of the target speed Tₛ.

**Example 7:** The computer system 800 of example 2, wherein the first criterion C₁ comprises an acceleration of the vehicle 2 being less than or equal to a threshold.

**Example 8:** The computer system 800 of example 7, wherein the threshold comprises a value less than or equal to 0.1 m/s².

**Example 9:** The computer system 800 of example 1, wherein the processing circuitry 802 is further configured to, in the torque control mode with the accelerator pedal 6 depressed: determine the instant the acceleration phase of the vehicle 2 is complete when the information indicative of the position of the accelerator pedal 6 fulfils a second criterion, wherein the second criterion comprises movement of the accelerator pedal 6 indicative of a driver's intention to end the acceleration phase.

**Example 10:** The computer system 800 of example 9, wherein the second criterion comprises movement of the accelerator pedal 6 from an initial position Pᵢ to a subsequent position Pₛ, wherein the subsequent position Pₛ is between 90-95% of the initial position Pᵢ.

**Example 11:** The computer system 800 of example 9, wherein the processing circuitry 802 is configured to determine the second criterion based on a machine learning model, wherein the machine learning model is trained based on one or more training vehicle 2s using information indicative of any one of speed and acceleration of the vehicle 2 and information indicative of movement of the accelerator pedal 6, and wherein the machine learning model is trained on the corresponding outcome of whether the respective training vehicle 2 was successful in ending the acceleration phase for a movement of the accelerator pedal 6.

**Example 12:** The computer system 800 of example 11, wherein the machine learning model is further trained on vehicle 2 status information indicative of any one or more of: environmental data of a current road portion, an upcoming road portion, and/or the vehicle 2, load applied to one or more axles of the vehicle 2, steering information of the vehicle 2, characteristics of the vehicle 2, or driver input.

**Example 13:** The computer system 800 of any of the preceding examples, wherein the processing circuitry 802 is further configured to: control the power unit 4 in a speed control mode only when the speed of the vehicle 2 is above a threshold, wherein the threshold is preferably in a range of 40-80 km/h, such as 60 km/h.

**Example 14:** The computer system 800 of any of the preceding examples, wherein the processing circuitry 802 is further configured to, in the speed control mode: switch control from the speed control mode to the torque control mode when the information indicative of the position of the accelerator pedal 6 fulfils a third criterion.

**Example 15:** The computer system 800 of example 14, wherein the third criterion comprises information indicative of the position of the accelerator pedal 6 such that the target speed Tₛ deviates from an initial target speed Tₛ by at least 5 km/h, wherein the initial target speed Tₛ comprises the target speed Tₛ upon control of the power unit 4 switching from the torque control mode to the speed control mode.

**Example 16:** A vehicle 2 comprising the computer system 800 of any of examples 1-15.

**Example 17:** A computer-implemented method for controlling propulsion of a vehicle 2, the vehicle 2 comprising: a power unit 4, configured to propel the vehicle 2, an accelerator pedal 6, the method comprising: by processing circuitry 802 of a computer system 800, obtaining S1 information indicative of a position of an accelerator pedal 6, by the processing circuitry 802, controlling S2 propulsion of the power unit 4 based on the information indicative of the position of the accelerator pedal 6, and wherein the method comprises controlling S2 the power unit 4 in either a torque control mode or a speed control mode, wherein in the torque control mode, the information indicative of the position of the accelerator pedal 6 is indicative of a target torque of the power unit 4 and controlling the power unit 4 is based on the target torque of the power unit 4, and in the speed control mode, the information indicative of the position of the accelerator pedal 6 is indicative of a target speed Tₛ of the vehicle 2 and controlling the power unit 4 is based on the target speed Tₛ of the vehicle 2, and wherein the method further comprises, in the torque control mode with the accelerator pedal 6 depressed: by the processing circuitry 802, determining S3 an instant that an acceleration phase of the vehicle 2 is complete, and by the processing circuitry 802, in response thereto, switching S4 control from the torque control mode to the speed control mode.

**Example 18:** The method of example 17, further comprising, in the torque control mode with the accelerator pedal 6 depressed: by the processing circuitry 802, obtaining S5 information indicative of any one of speed and acceleration of the vehicle 2, by the processing circuitry 802, determining S3 the instant the acceleration phase of the vehicle 2 is complete when the information indicative of any one of speed and acceleration fulfils a first criterion C₁, wherein the first criterion C₁ is indicative of completion of the acceleration phase.

**Example 19:** The method of example 17, further comprising, in the torque control mode with the accelerator pedal 6 depressed: by the processing circuitry 802, determining S3 the instant the acceleration phase of the vehicle 2 is complete when the information indicative of the position of the accelerator pedal 6 fulfils a second criterion, wherein the second criterion comprises movement of the accelerator pedal 6 indicative of a driver's intention to end the acceleration phase.

**Example 20:** A computer program 820 product comprising program code for performing, when executed by the processing circuitry 802, the method of any of examples 17-19.

**Example 21:** A non-transitory computer-readable storage medium 814 comprising instructions, which when executed by the processing circuitry 802, cause the processing circuitry 802 to perform the method of any of examples 17-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (800) comprising processing circuitry (802) configured to control propulsion of a vehicle (2),
the vehicle (2) comprising:
- a power unit (4), configured to propel the vehicle (2),
- an accelerator pedal (6),
wherein the processing circuitry (802) is further configured to:
- obtain information indicative of a position of the accelerator pedal (6),
- control propulsion of the power unit (4) based on the information indicative of the position of the accelerator pedal (6),
and wherein the processing circuitry (802) is further configured to control the power unit (4) in either a torque control mode or a speed control mode, wherein
in the torque control mode, the information indicative of the position of the accelerator pedal (6) is indicative of a target torque of the power unit (4) and the power unit (4) is controlled based on the target torque of the power unit (4), and
in the speed control mode, the information indicative of the position of the accelerator pedal (6) is indicative of a target speed (Tₛ) of the vehicle (2) and the power unit (4) is controlled based on the target speed (Tₛ) of the vehicle (2),
and wherein the processing circuitry (802) is further configured to, in the torque control mode with the accelerator pedal (6) depressed:
- determine an instant that an acceleration phase of the vehicle (2) is complete, and
- in response thereto, switch control from the torque control mode to the speed control mode.

2. The computer system (800) of claim 1, wherein the processing circuitry (802) is configured to, in the torque control mode with the accelerator pedal (6) depressed:
- obtain information indicative of any one of speed and acceleration of the vehicle (2),
- determine the instant the acceleration phase of the vehicle (2) is complete when the information indicative of any one of speed and acceleration fulfils a first criterion (C₁), wherein the first criterion (C₁) is indicative of completion of the acceleration phase.

3. The computer system (800) of claim 2, wherein the processing circuitry (802) is configured to, in the torque control mode with the accelerator pedal (6) depressed:
- obtain information indicative of a speed limit of a current road portion or a speed of a vehicle (2) in front,
- determine the target speed (Tₛ) of the vehicle (2) based on the information indicative of the speed limit of the current road portion or the speed of the vehicle (2) in front,
- determine the first criterion (C₁) based on the target speed (Tₛ).

4. The computer system (800) of claim 2, wherein the processing circuitry (802) is configured to, in the torque control mode with the accelerator pedal (6) depressed:
- obtain status information indicative of at least one of speed and/or acceleration of the vehicle (2), environmental data of the surface area and/or the vehicle (2), load applied to one or more axles of the vehicle (2), steering information of the vehicle (2), characteristics of the vehicle (2), or driver input,
- determine the target speed (Tₛ) of the vehicle (2) based on the position of the accelerator pedal (6) and the status information,
- determine the first criterion (C₁) based on the target speed (Tₛ).

5. The computer system (800) of any of claims 3-4, wherein the first criterion (C₁) comprises a speed of the vehicle (2) being greater than or equal to a threshold, wherein preferably the threshold comprises a value within 5km/h of the target speed (Tₛ), preferably within 2 km/h of the target speed (Tₛ).

6. The computer system (800) of claim 2, wherein the first criterion (C₁) comprises an acceleration of the vehicle (2) being less than or equal to a threshold, wherein preferably the threshold comprises a value less than or equal to 0.1 m/s²..

7. The computer system (800) of claim 1, wherein the processing circuitry (802) is further configured to, in the torque control mode with the accelerator pedal (6) depressed:
- determine the instant the acceleration phase of the vehicle (2) is complete when the information indicative of the position of the accelerator pedal (6) fulfils a second criterion, wherein the second criterion comprises movement of the accelerator pedal (6) indicative of a driver's intention to end the acceleration phase.

8. The computer system (800) of claim 7, wherein the second criterion comprises movement of the accelerator pedal (6) from an initial position (Pᵢ) to a subsequent position (Pₛ), wherein the subsequent position (Pₛ) is between 90-95% of the initial position (Pᵢ).

9. The computer system (800) of claim 7, wherein the processing circuitry (802) is configured to determine the second criterion based on a machine learning model, wherein the machine learning model is trained based on one or more training vehicle (2)s using information indicative of any one of speed and acceleration of the vehicle (2) and information indicative of movement of the accelerator pedal (6), and wherein the machine learning model is trained on the corresponding outcome of whether the respective training vehicle (2) was successful in ending the acceleration phase for a movement of the accelerator pedal (6).

10. The computer system (800) of claim 9, wherein the machine learning model is further trained on vehicle (2) status information indicative of any one or more of:
- environmental data of a current road portion, an upcoming road portion, and/or the vehicle (2),
- load applied to one or more axles of the vehicle (2),
- steering information of the vehicle (2),
- characteristics of the vehicle (2), or
- driver input.

11. The computer system (800) of any of the preceding claims, wherein the processing circuitry (802) is further configured to:
- control the power unit (4) in a speed control mode only when the speed of the vehicle (2) is above a threshold, wherein the threshold is preferably in a range of 40-80 km/h, such as 60 km/h.

12. A vehicle (2) comprising the computer system (800) of any of claims 1-11.

13. A computer-implemented method for controlling propulsion of a vehicle (2), the vehicle (2) comprising:
- a power unit (4), configured to propel the vehicle (2),
- an accelerator pedal (6),
the method comprising:
- by processing circuitry (802) of a computer system (800), obtaining (S1) information indicative of a position of an accelerator pedal (6),
- by the processing circuitry (802), controlling (S2) propulsion of the power unit (4)
based on the information indicative of the position of the accelerator pedal (6), and wherein the method comprises controlling (S2) the power unit (4) in either a torque control mode or a speed control mode, wherein
in the torque control mode, the information indicative of the position of the accelerator pedal (6) is indicative of a target torque of the power unit (4) and controlling the power unit (4) is based on the target torque of the power unit (4), and
in the speed control mode, the information indicative of the position of the accelerator pedal (6) is indicative of a target speed (Tₛ) of the vehicle (2) and controlling the power unit (4) is based on the target speed (Tₛ) of the vehicle (2),
and wherein the method further comprises, in the torque control mode with the accelerator pedal (6) depressed:
- by the processing circuitry (802), determining (S3) an instant that an acceleration phase of the vehicle (2) is complete, and
- by the processing circuitry (802), in response thereto, switching (S4) control from the torque control mode to the speed control mode.

14. A computer program (820) product comprising program code for performing, when executed by the processing circuitry (802), the method of claim 13.

15. A non-transitory computer-readable storage medium (814) comprising instructions, which when executed by the processing circuitry (802), cause the processing circuitry (802) to perform the method of claim 13.
